# DEMANDE DE BREVET EUROPEEN

(11) **EP 1 108 905 A1**
(43) Date de publication de la demande: **20.06.2001**
(21) Numéro de dépôt: 00490054.4
(22) Date de dépôt: 14.12.2000
(51) Int. Cl.: F16C 13/00, F16C 35/06

(54) **Procédé de fabrication d'un galet**

(30) Priorité: 14.12.1999 FR 9915771
(71) Demandeur: Société d'Exploitation de la Manufacture Parisienne de Roulettes "M.P.R."Société Anonyme, 95400 Arnouville les Gonesse (FR)
(72) Inventeur: Taddei, Thierry, 80400 Eppeville (FR); Legrand, Claude, M.P.R., 60640 Quesmy (FR)
(74) Mandataire: Duthoit, Michel

(57) **Abrégé**

L'invention concerne un procédé de fabrication d'un organe rotatif autour d'un axe, dit de pivotement, notamment roue, roulette, galet de manutention ou autres, ledit organe comprenant au moins un corps (2) et des moyens de roulement (3) positionnés de façon à permettre la rotation dudit corps (2) autour dudit axe de pivotement (4), procédé dans lequel :
- on monte lesdits moyens de roulement (3) au niveau d'une entretoise (5), destinée à permettre au moins le positionnement desdits moyens de roulement (3),
- on forme ledit corps (2) autour de ladite entretoise (5) en fixant en position lesdits moyens de roulement (3) avec au moins la matière dudit corps (2).

L'invention concerne également un organe rotatif, notamment, roue, roulette, galet de manutention ou autres, obtenu selon un tel procédé.

## Description

L'invention concerne un procédé de fabrication d'un organe rotatif ainsi qu'un organe rotatif obtenu par un tel procédé.

Bien que plus particulièrement prévue pour la fabrication de galets de manutention, elle pourra être utilisée, de manière plus générale, pour l'obtention de roues, de roulettes, ou de tous autres organes rotatifs.

Actuellement, il est connu des galets de manutention constitués d'un corps tubulaire libre en rotation autour de son axe longitudinal grâce à des roulements à billes placés dans des logements situés au niveau des extrémités axiales du corps.

Pour fabriquer de tels galets, on constitue préalablement le corps et on met en place les roulements à billes par emmanchage à force dans leur logement.

L'un des inconvénients rencontrés avec un tel procédé provient du fait qu'il est difficile de concilier précision du positionnement des roulements à billes et tenue à l'arrachement de ceux-ci. Il en résulte des défauts d'alignement des roulements à billes qui ne sont pas coaxiaux, ce qui accélère l'usure des pièces mises en jeu.

Le but de la présente invention est de proposer un procédé de fabrication d'un organe rotatif et un organe rotatif obtenu selon un tel procédé qui permettent de pallier les inconvénients précités et d'augmenter la tenue à l'arrachement des moyens de roulement rentrant dans la constitution desdits organes.

Un autre but de la présente invention est de proposer un procédé de fabrication d'un organe rotatif et un organe rotatif obtenu selon un tel procédé qui permettent d'améliorer la précision du montage des moyens de roulements qu'ils intègrent.

D'autres buts et avantages de l'invention apparaîtront au cours de la description qui va suivre qui n'est donnée qu'à titre indicatif et qui n'a pas pour but de la limiter.

L'invention concerne tout d'abord un procédé de fabrication d'un organe rotatif autour d'un axe, dit de pivotement, notamment roues, roulettes, galets de manutention ou autres, ledit organe comprenant au moins un corps et des moyens de roulement positionnés de façon à permettre la rotation dudit corps autour dudit axe de pivotement, procédé dans lequel :
- on monte lesdits moyens de roulement au niveau d'une entretoise destinée à permettre au moins le positionnement desdits moyens de roulement,
- on forme ledit corps autour de ladite entretoise en fixant en position lesdits moyens de roulement avec au moins la matière dudit corps.

L'invention concerne également un organe rotatif, notamment roues, roulettes, galets de manutention ou autres, obtenu selon le procédé décrit plus haut.

L'invention sera mieux comprise à la lecture de la description suivante, accompagnée des dessins en annexe qui en font partie intégrante et parmi lesquels :
- les figures 1a et 1b illustrent de manière schématique les étapes d'un exemple de mise en oeuvre du procédé conforme à l'invention en utilisant des vues réalisées selon un plan de coupe diamétral de organes mise en jeu,
- les figures 2 à 5 sont des vues réalisées selon un plan de coupe diamétral de différents exemples de réalisation de l'organe rotatif conforme à l'invention,
- la figure 6 illustre selon un plan de coupe longitudinal un exemple de réalisation d'un outillage pour la mise en oeuvre du procédé conforme à l'invention.

L'invention concerne tout d'abord un procédé de fabrication d'un organe rotatif, notamment roues, roulettes, galets de manutention ou autres.

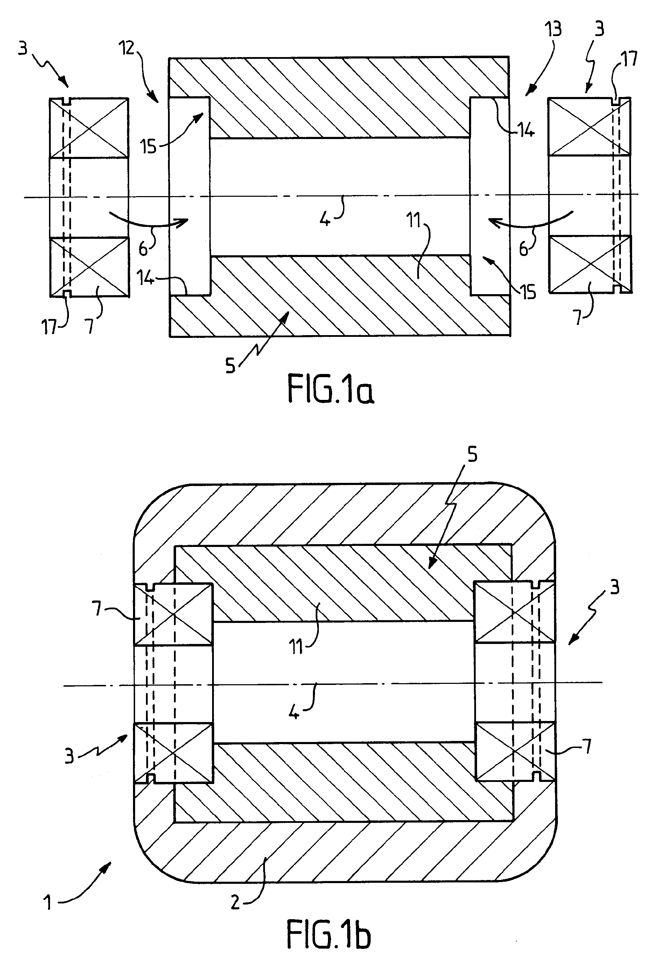

Comme illustré aux figures 1a et 1b, ledit organe 1 comprend au moins un corps 2 et des moyens de roulement 3 positionnés de façon à permettre la rotation dudit corps 2 autour de l'axe de pivotement 4, notamment virtuel, dudit organe rotatif 1.

Selon l'invention, lors d'une première étape, on monte lesdits moyens de roulement au niveau d'une entretoise 5, comme illustrée par les flèches repérées 6 à la figure 1a. Ladite entretoise est destinée à permettre au moins le positionnement desdits moyens de roulement 3.

Lors d'une seconde étape, illustrée à la figure 1b, on forme ledit corps 2 autour de ladite entretoise 5 en fixant en position lesdits moyens de roulement 3 avec au moins la matière dudit corps 2.

Ainsi, en n'utilisant plus ledit corps 2 pour assurer la mise en place desdits moyens de roulement 3 mais un organe distinct, à savoir ladite entretoise 5, on peut améliorer celui-ci en choisissant pour ladite entretoise 5 des caractéristiques différentes, notamment une autre matière. En effet, la configuration de l'entretoise n'est pas limitée par les contraintes spécifiques que doit respecter ledit corps 2, par exemple en ce qui concerne son poids, la réalisation ou le support de la bande de roulement ou autres.

En outre, en réalisant la fixation desdits moyens de roulement 3 au moins en partie pendant la formation du corps 2, avec la matière de ce dernier, on améliore leur résistance à l'arrachement en assurant une coopération plus intime dudit corps 2 et desdits moyens de roulement 3.

Selon un mode de réalisation particulier, on ajuste lesdits moyens de roulement 3 au niveau de ladite entretoise 5 de manière bloquante et on renforce leur fixation en position avec la matière dudit corps 2 lors de la formation de ce dernier.

On prévoit lesdits moyens de roulement, par exemple, sous la forme de roulements à billes et/ou rouleaux 7.

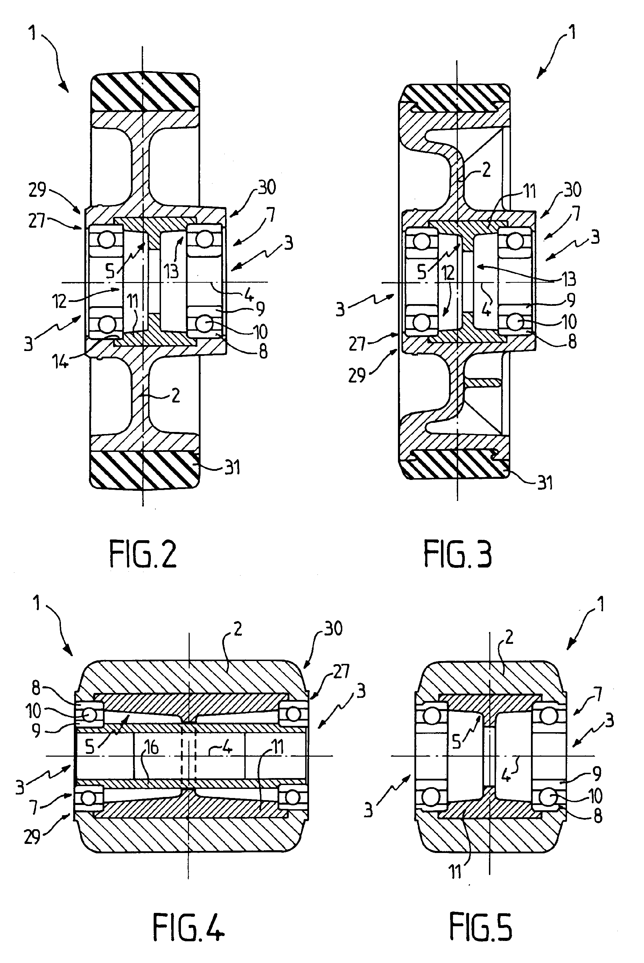

Comme illustré aux figures 2 à 5, il s'agit, notamment de roulements de type connu, constitués d'une bague extérieure 8 et d'une bague intérieure 9 montées libres en rotation l'une par rapport à l'autre autour de leur axe de pivotement grâce à des billes 10.

Quant à ladite entretoise 5, elle se présente sous la forme, par exemple, d'au moins un organe tubulaire 11.

On introduit undit roulement 7 à chacune des extrémités longitudinales 12, 13 du ou desdits organes tubulaires 11 en laissant éventuellement une partie desdits roulements 7 dépasser et/ou au moins affleurer axialement hors du ou desdits organes tubulaires 11.

Selon ce mode de réalisation, on fixe lesdits moyens de roulement 3 à l'aide de la matière dudit corps 2 par coopération de celle-ci avec la partie affleurante et/ou dépassante desdits roulements 7, au niveau de leur bague extérieure 8. Cette dernière est ainsi, par exemple, sur une partie de sa hauteur, en contact avec la paroi interne 14 du ou desdits organes tubulaires 5 et, sur l'autre partie de sa hauteur, avec la matière dudit corps 2.

On pourra éventuellement prévoir, au niveau des extrémités longitudinales 12, 13 de la ou desdits organes tubulaires 11, des logements 15, aptes à définir des sièges pour lesdits roulements 7. Lors du montage desdits moyens de roulement 3 sur ladite entretoise 5, on introduit alors lesdits roulements 7 dans lesdits logements 15.

Selon un mode de réalisation particulier, illustré à la figure 4, on pourra en outre prévoir, à l'intérieur du ou desdits organes tubulaires 11 constituant ladite entretoise 5, un ou des autres organes tubulaires 16, coaxiaux, destinés au montage dudit organe rotatif 1 sur son support, le ou lesdits autres organes tubulaires 16 coopérant avec la bague intérieure 9 desdits roulements 8. Naturellement, ladite entretoise 5 est laissée libre en rotation autour du ou desdits autres organes tubulaires 16.

On pourra encore prévoir, comme illustré aux figures 1a et 1b, une gorge 17 au niveau de la partie desdits roulements 7 dépassant du ou desdits organes tubulaires 11. Ladite gorge 17 est située, par exemple, sur la périphérie de la bague extérieure 8 desdits roulements 7, notamment à mi-hauteur de sa partie dépassante. On introduit alors la matière dudit corps 2 dans ladite gorge 17, lors de la formation de ce dernier. On conçoit qu'un tel mode de réalisation améliore encore la tenue à l'arrachement desdits moyens de roulement 3.

Cela étant, lesdits roulements 7 sont, par exemple, emmanchés à force dans le ou lesdits organes tubulaires 11. Quant audit corps 2, il est, notamment, moulé.

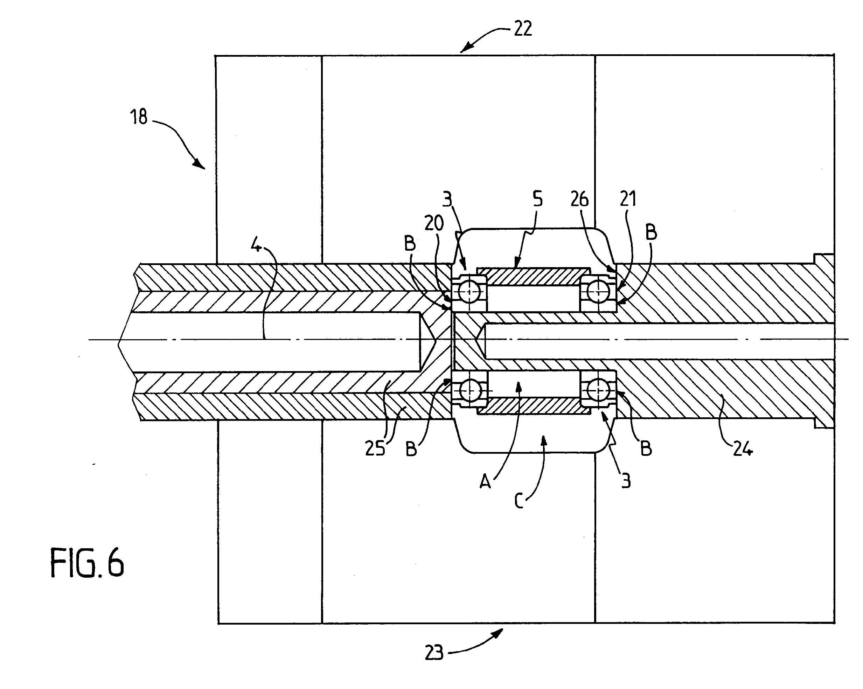

Comme illustré à la figure 6, on prévoit plus précisément pour cela, par exemple, un moule 18 présentant une cavité de moulage 19, destinée à l'obtention, au moins partielle dudit organe rotatif 1.

On met en place ladite entretoise 5 sur laquelle ont été préalablement montés lesdits moyens de roulement 3, en un emplacement donné A de ladite cavité 19, en définissant de la sorte un insert.

On réalise une liaison étanche B entre les parois de ladite cavité 19 et chacune des extrémités opposées 20, 21, selon ledit axe de pivotement 4, dudit insert, dites extrémités longitudinales dudit insert.

On introduit la matière dudit corps dans ladite cavité pour obtenir ledit corps par moulage, au niveau d'une zone repérée C, en empêchant toute introduction de matière dudit corps entre lesdites extrémités longitudinales 20, 21 de l'insert, grâce à ladite liaison étanche B. En particulier, il s'agit d'empêcher l'introduction de matière entre les bagues 8, 9 des roulements 7.

Ledit moule 18 est constitué, par exemple, d'au moins deux parties 22, 23 définissant entre elles ladite cavité de moulage 19. Des parties amovibles par rapport auxdites deux parties 22, 23 peuvent en outre être prévues. Il s'agit tout d'abord, notamment, d'une broche 24, apte à supporter et/ou à centrer ledit insert dans ladite cavité 19 lors du moulage et/ou d'un élément d'obturation 25 apte à être appliqué en pression, lors de la fermeture du moule, à l'une des extrémités longitudinales 20 dudit insert pour assurer ladite liaison étanche B à ce niveau. A son autre extrémité longitudinale 21, ladite liaison étanche B est obtenue, notamment, par mise en appui dudit insert contre un épaulement 26 prévu sur ladite broche 24.

Avec un tel moule 18, on peut ainsi, à titre d'exemple, procéder de la manière suivante : on monte l'un desdits roulements 7 sur ladite broche 24, puis ladite entretoise 5 et le second roulement 7. On ferme ensuite ladite cavité de moulage 19 entre lesdites parties 22, 23 du moule avec son élément d'obturation 25 qui applique une pression sur ledit insert pour obtenir ladite liaison étanche B. On introduit alors la matière dudit corps 2 dans la partie C restant libre de la cavité ou moulage.

A ce sujet, ledit corps 2 est obtenu, par exemple, par moulage par injection. Un tel mode de réalisation, grâce au retrait de matière constatée, permet de favoriser la fixation desdits moyens de roulement 3.

On observe notamment la formation d'une collerette de retenue 27, représentée uniquement à certaines figures, au niveau des bords longitudinaux extérieurs des bagues extérieures 8 de chacun desdits roulements 7, partant des bords longitudinaux 29, 30 du corps 2 et s'étendant radialement en direction dudit axe de pivotement 4.

En cas de présence de ladite gorge 17 évoquée plus haut, l'injection de la matière dudit corps 2 permet également de rendre une telle caractéristique encore plus efficace vis-à-vis de l'amélioration de la résistance à l'arrachement des moyens de roulement 3.

Cela étant, comme illustré aux figures 2 et 3, on pourra réaliser une bande de roulement 31 autour dudit corps 2, notamment en utilisant unedite cavité de moulage 19 aux dimensions dudit organe rotatif 1 fini.

Plus précisément, selon un premier mode de réalisation, on forme préalablement ladite bande de roulement 31, on la met en place dans ladite cavité de moulage 19 et on moule ledit corps 2 entre ledit insert et ladite bande 31.

Selon un autre mode de réalisation, on forme d'abord ledit corps 2, comme précédemment évoqué, puis ladite bande de roulement 31, par injection bi-matière. Ledit moule 18 est muni pour cela, par exemple, d'un tiroir, non représenté, coulissant selon ledit axe de pivotement 4 pour autoriser dans ladite cavité 19, après injection et formation dudit corps 2, l'introduction de la matière de ladite bande de roulement 31.

Selon un mode de mise en oeuvre particulier, on forme lesdits organes rotatifs 1 les uns à la suite des autres au niveau d'un même outillage, incluant ledit moule 18, l'insert d'un desdits organes rotatifs 1 étant monté simultanément au moulage au moins du corps 2 de l'organe rotatif précédent, puis introduit dans ladite cavité de moulage 19 après expulsion dudit organe rotatif 1 précédent, une fois celui-ci achevé.

L'introduction de l'insert est réalisé, notamment, de manière automatique. Néanmoins, cette opération pourra être déclenchée de manière manuelle par un opérateur afin de garder le contrôle du séquencement du procédé.

L'invention concerne également un organe rotatif 1, notamment roue, roulette, galet de manutention ou autres, obtenu selon le procédé décrit plus haut.

Ses dimensions et/ou sa forme pourront varier en fonction, par exemple, de la configuration de ladite cavité de moulage 19 qui, grâce à la constitution du moule 18, pourra être facilement rendue variable.

Ledit organe rotatif 1 est destiné à être monté, notamment, sur un arbre 3, non représenté, dont l'axe longitudinal correspond audit axe de pivotement 4.

Naturellement, d'autres modes de mise en oeuvre, à la portée de l'homme de l'art, auraient pu être envisagés, sans pour autant sortir du cadre de l'invention.

## Revendications

1. Procédé de fabrication d'un organe rotatif (1) autour d'un axe, dit de pivotement, notamment roue, roulette, galet de manutention ou autres, ledit organe comprenant au moins un corps (2) et des moyens (3) de roulement positionnés de façon à permettre la rotation dudit corps (2) autour dudit axe de pivotement (4), procédé dans lequel :
- on monte lesdits moyens de roulement au niveau d'une entretoise (5) destinée à permettre au moins le positionnement desdits moyens de roulement (3),
- on forme ledit corps (2) autour de ladite entretoise (5) en fixant en position lesdits moyens de roulement (3) avec au moins la matière dudit corps (2).

2. Procédé selon la revendication 1, dans lequel on ajuste lesdits moyens de roulement (3) au niveau de ladite entretoise (5) de manière bloquante et on renforce leur fixation en position avec la matière dudit corps (2) lors de la formation de ce dernier.

3. Procédé selon la revendication 1, dans lequel :
- on prévoit lesdits moyens de roulement (3) sous la forme de roulements à billes ou rouleaux (7),
- on prévoit ladite entretoise (5) sous la forme d'au moins un organe tubulaire (11),
- on introduit undit roulement (7) à chacune des extrémités longitudinales (12, 13) du ou desdits organes tubulaires (11) en laissant une partie desdits roulements dépasser et/ou au moins affleurer axialement hors du ou desdits organes tubulaires (11),
- on fixe lesdits moyens de roulement (3) à l'aide de la matière dudit corps (2) par coopération de celle-ci avec la partie affleurante et/ou dépassante desdits roulements (7).

4. Procédé selon la revendication 3, dans lequel on prévoit une gorge (17) au niveau de la partie desdits roulements (7) dépassant du ou desdits organes tubulaires (11) et on introduit la matière dudit corps (2) dans ladite gorge (17) lors de la formation de ce dernier.

5. Procédé selon la revendication 1, dans lequel :
- on prévoit un moule (18) présentant une cavité de moulage (19), destinée à l'obtention, au moins partielle, dudit organe rotatif (1),
- on met en place ladite entretoise (5) sur laquelle ont été préalablement montés lesdits moyens de roulement (3) en un emplacement A donné de ladite cavité (19), en définissant de la sorte un insert,
- on réalise une liaison étanche B entre les parois de ladite cavité (19) et chacune des extrémités opposées (20, 21), selon ledit axe de pivotement (4), dudit insert, dites extrémités longitudinales dudit insert,
- on introduit la matière dudit corps (2) dans ladite cavité (19) pour obtenir ledit corps (2) par moulage, en empêchant toute introduction de matière dudit corps entre lesdites extrémités longitudinales (20, 21) de l'insert grâce à ladite liaison étanche B.

6. Procédé selon la revendication 5, dans lequel on réalise une bande de roulement (31) autour dudit corps (2), en utilisant unedite cavité de moulage (19) aux dimensions dudit organe, fini.

7. Procédé selon la revendication 6, dans lequel on forme préalablement ladite bande de roulement (31), on la met en place dans ladite cavité de moulage (19) et on moule ledit corps (2) entre ledit insert et ladite bande (31).

8. Procédé selon la revendication 6, dans lequel on forme ledit corps (2) puis ladite bande de roulement (31) par bi-injection de matière.

9. Procédé selon la revendication 5, dans lequel on forme lesdits organes rotatifs (1) les uns à la suite des autres au niveau d'un même outillage, l'insert d'un desdits organes rotatifs étant monté simultanément au moulage au moins du corps de l'un des organes rotatifs précédents, puis introduit dans ladite cavité de moulage (19) après expulsion dudit organe rotatif précédent.

10. Organe rotatif, notamment roue, roulette, galet de manutention ou autres, obtenu selon le procédé conforme à la revendication 1.
